# EUROPEAN PATENT APPLICATION

(11) **EP 1 933 483 A2**
(43) Date of publication of application: **18.06.2008**
(21) Application number: 07115547.7
(22) Date of filing: 03.09.2007
(51) Int. Cl.: H04H 60/27

(54) **Broadcast receiving apparatus and method**

(30) Priority: 14.12.2006 KR 20060127739
(71) Applicant: SAMSUNG ELECTRONICS CO., LTD., Suwon-City, Kyungki-do (KR)
(72) Inventor: Kim, Sang-hee 106-801, Hogye e-pyeonhansesang Apartment,, Gyeonggi-do (KR); Kim, Kyung-sik, Yeongdeungpo- gu, Seoul (KR); Oh, Sang-seok, Goyang-si, Gyeonggi-do (KR)
(74) Representative: Clark, Charles Robert

(57) **Abstract**

A broadcast receiving apparatus and a broadcast receiving method are provided, for providing a time-shift function using an external storage medium. An amount of a previous broadcast corresponding to a predetermined period of time, which is required for providing the previous broadcast of a point in time previous to the current point in time, is selectively and temporarily stored in one of an internal storage medium and an external storage medium connected to an interface. Accordingly, the number of storages of the internal storage medium can be reduced, thereby increasing the lifespan of the internal storage medium.

## Description

Apparatuses and methods consistent with the present invention relate to receiving a broadcast. More particularly, the present invention relates to a broadcast receiving apparatus and a broadcast receiving method for providing a time-shift function.

A time-shift function is a function for displaying a broadcast (e.g., a previous broadcast) of a point of time previous to the current point of time on a screen, and a user can watch the previous broadcast using the time-shift function.

In order to provide the time-shift function, it is necessary to store a predetermined amount of the previous broadcast in a broadcast receiving apparatus.

Accordingly, a storage medium for storing a predetermined amount of the previous broadcast is embedded in the broadcast receiving apparatus capable of providing the time-shift function. However, there is a limit in the lifespan of the storage medium embedded in the broadcast receiving apparatus. That is, there is a limit in the number of storages of previous broadcasts in the storage medium.

Therefore, there is a need for a method for using a storage medium embedded in a broadcast receiving apparatus for a relatively long time .

Exemplary embodiments of the present invention overcome the above disadvantages and other disadvantages not described above. In addition, the present invention is not required to overcome the disadvantages described above, and an exemplary embodiment of the present invention may not overcome any of the problems described above.

Accordingly, an aspect of the present invention aims to provide a broadcast receiving apparatus and a broadcast receiving method, which can provide a time-shift function using an external storage medium connected to the broadcast receiving apparatus for using a storage medium embedded in the broadcast receiving apparatus for a relatively long period of time.

An aspect of the present invention provides a broadcast receiving apparatus comprising: an internal storage medium which stores a broadcast; an interface connected to an external storage medium to communicate with the external storage medium; a control unit which controls the broadcast receiving apparatus so that an amount of a previous broadcast corresponding to a predetermined period of time, which is required for providing the previous broadcast of a point in time previous to the current point in time, is selectively and temporarily stored in one of the internal storage medium and the external storage medium connected to the interface.

In an exemplary embodiment, the control unit may control the broadcast receiving apparatus so that the previous broadcast is stored in the external storage medium, if the external storage medium is determined to be connected to the interface while the previous broadcast is being stored in the internal storage medium.

Additionally, the control unit may control the broadcasting receiving apparatus so that one of the previous broadcasts stored in the internal storage medium and the external storage medium, the display of which is instructed, is output, if the display instruction of the previous broadcast is input.

In an exemplary embodiment, the control unit may control the broadcast receiving apparatus so that the previous broadcast is temporarily stored in the internal storage medium, if the external storage medium is determined to be separated from the interface while the previous broadcast is being stored in the external storage medium.

Additionally, the control unit may control the broadcast receiving apparatus so that the previous broadcast is temporarily stored in one of the internal storage medium and the external storage medium, which is selected by a user.

In an exemplary embodiment, the control unit may control the broadcast receiving apparatus so that the previous broadcast is stored in the internal storage medium, if a storage delay of the previous broadcast is generated in the external storage medium.

In an exemplary embodiment, the control unit may control the broadcast receiving apparatus so that the previous broadcast temporarily stored in the internal storage medium is transferred to the external storage medium, if the storage delay of the previous broadcast is released from the external storage medium.

Additionally, the internal storage medium may be one of a semiconductor memory, a flash memory, a magnetic storage medium, and a hard disk drive (HDD), and the external storage medium may be one of a semiconductor memory, a flash memory, a memory card, a magnetic storage medium, and the HDD which is connected to the interface to communicate with the interface in one of a universal serial bus (USB) method, an IEEE 1394 method, a personal computer memory card international association (PCMCIA) method, and a serial communication.

The broadcast receiving apparatus may further comprise: a broadcast output unit which displays the broadcast on a display device.

Additionally, the previous broadcast corresponds to a period of time, which is required for providing the previous broadcast of a previous point in time to a current point in time.

In accordance with another aspect of the present invention, there is provided a broadcast receiving method comprising: determining connection of an external storage medium; and storing selectively and temporarily an amount of a previous broadcast corresponding to a predetermined period of time, which is required for providing the previous broadcast of a point in time previous to the current point in time, in one of an internal storage medium and the external storage medium, if the external storage medium is determined to be connected.

In an exemplary embodiment, in the storing, the previous broadcast may be stored in the external storage medium, if the external storage medium is connected while the previous broadcast is being stored in the internal storage medium.

Additionally, the broadcast receiving method may further comprise outputting one of the previous broadcasts stored in the internal storage medium and the external storage medium, the display of which is instructed, if the display instruction of the previous broadcast is input.

In an exemplary embodiment, the broadcast receiving method may further comprise storing temporarily the previous broadcast in the internal storage medium, if the external storage medium is determined to be separated while the previous broadcast is being stored in the external storage medium.

Additionally, in the storing, the previous broadcast may be temporarily stored in one of the internal storage medium and the external storage medium, which is selected by a user.

In an exemplary embodiment, the broadcast receiving method may further comprise storing the previous broadcast in the internal storage medium, if a storage delay of the previous broadcast is generated in the external storage medium.

In an exemplary embodiment, the broadcast receiving method may further comprise transferring the previous broadcast temporarily stored in the internal storage medium to the external storage medium, if the storage delay of the previous broadcast is released from the external storage medium.

Additionally, the internal storage medium may be one of a semiconductor memory, a flash memory, a magnetic storage medium, and an HDD, and the external storage medium may be one of a semiconductor memory, a flash memory, a memory card, a magnetic storage medium, and the HDD which is connected to the interface to communicate with the interface in one of a USB method, an IEEE 1394 method, a PCMCIA method, and a serial communication.

Additionally, the broadcast receiving method may further comprise displaying the broadcast on a display device.

Additionally, the previous broadcast corresponds to a period of time, which is required for providing the previous broadcast of a previous point in time to a current point in time.

Embodiments of the present invention are now described by way of example with reference to the accompanying drawings, in which:
Figure 1 is a block diagram of a broadcast receiving apparatus for providing a time-shift function using an external storage medium according to an exemplary embodiment of the present invention;
Figure 2 is a flow chart shows a broadcast receiving method for providing a time-shift function using an external storage medium according to an exemplary embodiment of the present invention;
Figure 3 is a block diagram of a broadcast receiving apparatus for providing a time-shift function using an external storage medium according to another exemplary embodiment of the present invention; and
Figure 4 is a flow chart shows a broadcast receiving method for providing a time-shift function using an external storage medium according to another exemplary embodiment of the present invention.

Hereinafter, exemplary embodiments of the present invention will be described in detail with reference to the accompanying drawings.

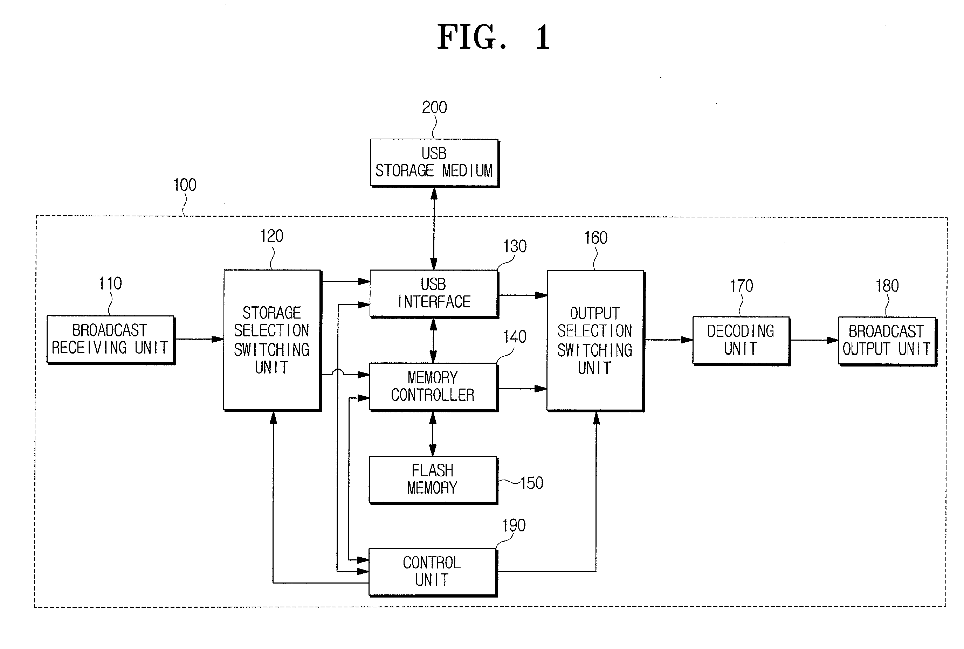

Figure 1 is a block diagram of a broadcast receiving apparatus according to an exemplary embodiment of the present invention. The broadcast receiving apparatus, according to an exemplary embodiment of the present invention, provides a time-shift function for displaying a broadcast (i.e., a previous broadcast) of a point in time previous to the current point in time. In providing the time-shift function, the broadcast receiving apparatus according to an exemplary embodiment of the present invention can use an external storage medium connected thereto.

As shown in Figure 1, the broadcast receiving apparatus 100 according to an exemplary embodiment of the present invention includes a broadcast receiving unit 110, a storage selection switching unit 120, a USB interface 130, a memory controller 140, a flash memory 150, an output selection switching unit 160, a decoding unit 170, a broadcast output unit 180, and a control unit 190. Additionally, the broadcast receiving apparatus 100 can be connected to a USB storage medium 200, which is one of external storage media.

The broadcast receiving unit 110 receives a broadcast by wire or wirelessly from a broadcasting station or a satellite.

The storage selection switching unit 120 performs a switching operation to selectively transfer the broadcast received in the broadcast receiving unit 110 to a USB interface 130 or a memory controller 140, which will be described later. The switching operation of the storage selection switching unit 120 is controlled by a control unit 190, which will be described later.

The USB interface 130 is connected to the USB storage medium 200 to communicate with the USB storage medium 200 in a USB method and can transfer the broadcast output from the storage selection switching unit 120 to the USB storage medium 200. In addition, the USB interface 130 can receive the broadcast stored in the USB storage medium 200 and transfer it to an output selection switching unit 160 which will be described later.

The memory controller 140 can store the broadcast output from the storage selection switching unit 120 in the flash memory 150. In addition, the memory controller 140 can read the broadcast stored in the flash memory 150 and transfer it to the output selection switching unit 160.

On the other hand, the USB interface 130 and the memory controller 140 are connected to each other to communicate with each other. Accordingly, the broadcast stored in the flash memory 150 can be copied or moved to the USB storage medium 200, and the broadcast stored in the USB storage medium 200 can be copied or moved to the flash memory 150.

The flash memory 150 is an internal storage medium in which a broadcast is temporarily stored by the memory controller 140 and a predetermined amount of broadcast (e.g., corresponding to 6 hours) can be stored in the flash memory 120 in the first-in/first-out (FIFO) method.

The output selection switching unit 160 performs a switching operation to selectively transfer the broadcast output from the USB interface 130 or the memory controller 140 to the decoding unit 170 which will be described later. The switching operation of the output selection switching unit 160 is controlled by the control unit 190.

The decoding unit 170 decodes the broadcast output from the output selection switching unit 160 and the broadcast output unit 180 displays the decoded broadcast on a display device such as a liquid crystal display (LCD).

The control unit 190 controls the overall operation of the broadcast receiving apparatus 100. Especially, when the time-shift function is provided, the control unit 190 selectively uses a storage space provided in the flash memory 150 and a storage space provided in the USB storage medium 200.

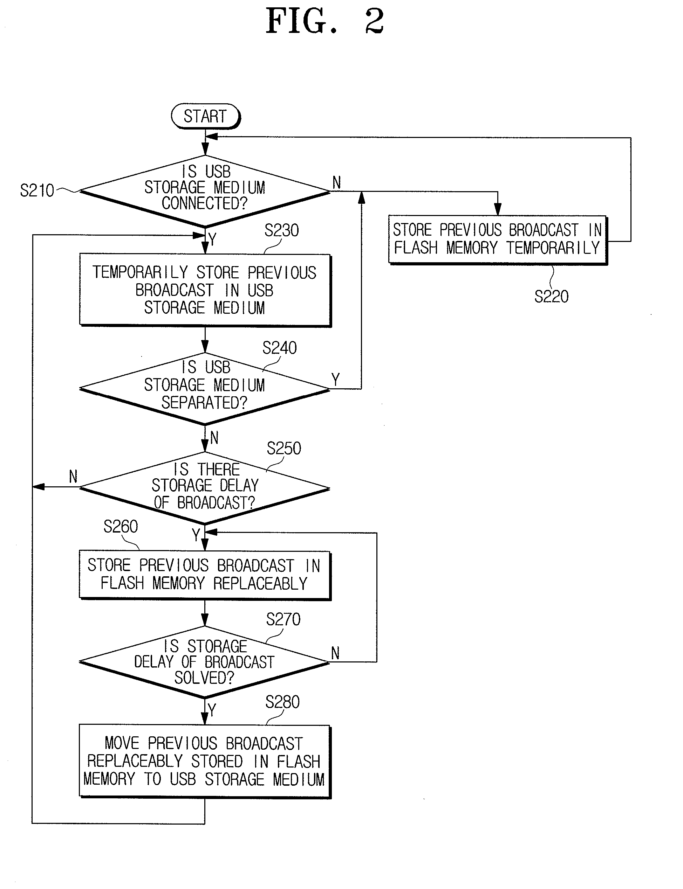

That is, in providing the time-shift function, the control unit 190 can use not only the flash memory 150, i.e., an internal storage medium but also the USB storage medium 200, i.e., an external storage medium, which will be described in detail with reference to Figure 2.

Figure 2 is a flow chart which shows a broadcast receiving method providing the time-shift function using the external storage medium according to a exemplary embodiment of the present invention.

As shown in Figure 2, first, the control unit 190 determines whether the USB storage medium 200 is connected to the broadcast receiving apparatus (S210). More specifically, in S210, the control unit 190 can determine connection of the USB storage medium 200 according to reception of a detection signal output from the USB interface 130 in the case in which the USB storage medium 200 is connected.

If the USB storage medium 200 is determined not to be connected in S210 (S210-N), the control unit 190 controls the broadcast receiving apparatus to temporarily store the previous broadcast required for providing the time-shift function in the flash memory 150 (S220). In order to perform S220, the control unit controls the switching operation of the storage selection switching unit 120 so that the broadcast received in the broadcast receiving unit 110 can be transferred to the memory controller 140. Then, the memory controller 140 temporarily stores the transferred broadcast in the flash memory 150.

Additionally, the memory controller 140 also transfers the received broadcast to the output selection switching unit 160. The control unit 190 controls the output selection switching unit 160 so that the broadcast received in the broadcast receiving unit 110 and transferred to the memory controller 140 can be decoded in the decoding unit 170 and can be displayed on the broadcast output unit 180.

Meanwhile, if the USB storage medium 200 is determined to be connected in S210 (S210-Y), the control unit 190 controls the broadcast receiving apparatus to temporarily store the previous broadcast required for providing the time-shift function in the USB storage medium 200 (S230). In order to perform S230, the control unit 190 controls the switching operation of the switching unit 120 so that the broadcast received in the broadcast receiving unit 110 can be transferred to the USB interface 130. Then, the USB interface 130 temporarily stores the transferred broadcast in the USB storage medium 200.

Additionally, the USB interface 130 also transfers the received broadcast to the output selection switching unit 160. The control unit 190 controls the output selection switching unit 160 so that the broadcast received in the broadcast receiving unit 110, and transferred to the USB interface 130, can be decoded in the decoding unit 170 and can be displayed on the broadcast output unit 180.

On the other hand, if the connected USB storage medium 200 is determined to be separated (S240-Y), the control unit 190 controls the broadcast receiving apparatus to temporarily store the previous broadcast required for providing the time-shift function in the flash memory 150 (S220), and then S210 is performed again.

Meanwhile, as long as the connected USB storage medium 200 is not separated (S240-N) and there is no storage delay of the broadcast (S250-N), S230 is continuously performed. Here, "the storage delay of the broadcast" refers to the case in which the speed of temporarily storing the broadcast in the USB storage medium 200 is so slow that the broadcast transferred from the broadcast receiving unit 110 cannot be properly stored temporarily. This occurs when the internal state of the USB storage medium 200 or the connection of the USB interface 130 and the USB storage medium 200 is deteriorated.

On the other hand, if it is determined that the connected USB storage medium 200 is not separated (S240-N) but there is a storage delay of the broadcast (S250-Y), the control unit controls the broadcast receiving apparatus to replaceably store the previous broadcast, which is to be temporarily stored in the USB storage medium 200, in the flash memory 150 (S260).

In order to perform S260, the control unit 190 controls the switching operation of the storage selection switching unit 120 so that the broadcast received in the broadcast receiving unit 110 can be transferred to the memory controller 140. Then, the memory controller 140 replaceably stores the transferred broadcast in the flash memory 150.

The replaceable storage (S260) is continued until the storage delay of the broadcast is solved (S270), i.e., no longer exists.

If it is determined that the storage delay of the broadcast is solved (S270-Y), the control unit 190 moves the previous broadcast, which is replaceably stored in the flash memory 150, onto the USB storage medium 200 (S280), and then S230 is performed again. In order to perform S280, the control unit 190 controls the memory controller 140 to read the previous broadcast replaceably stored in the flash memory 150 and transfers it to the interface 130 and controls the USB interface 130 to transfer the transferred previous broadcast to the USB storage medium 200.

Until now, the process of providing the time-shift function using the flash memory 150, i.e., an internal storage medium and the USB storage medium 200, i.e., an external storage medium has been explained in detail with reference to an exemplary embodiment.

In the exemplary embodiment, the previous broadcast is assumed to be temporarily stored in the USB storage medium 200, i.e., an external storage medium. That is, it is assumed that if the USB storage medium 200 is connected while the previous broadcast is being temporarily stored in the flash memory 150, i.e., an internal storage medium, the temporary storage of the previous broadcast in the flash memory 150 is stopped and the temporary storage of the previous broadcast in the USB storage medium 200 is started.

However, this is merely an example for explanation and can be realized in a different way. As another example, if the USB storage medium 200 is connected, the previous broadcast may be temporarily stored in one of the flash memory 150 and the USB storage medium 200, which is selected by a user. That is, the previous broadcast may be selectively stored in one of the internal storage medium and the external storage medium.

Additionally, in the exemplary embodiment, the previous broadcast is selectively stored in one of the two storage media by controlling the switching operations of the storage selection switching unit 120 and the output selection switching unit 160, which is also merely an example for explanation.

Therefore, the previous broadcast may be selectively stored in one of the two storage media not by using the storage selection switching unit 120 and the output selection switching unit 160 but by controlling the broadcast input/output paths of the broadcast receiving unit 110, the USB interface 130, the memory controller 140, and the decoding unit 170.

Additionally, in the case in which the USB storage medium 200 is connected and the previous broadcast is temporarily stored in the USB storage medium 200 while the previous broadcast is being temporarily stored in the flash memory 150, the previous broadcast is stored in both the flash memory 150 and the USB storage medium 200. In this case, if the previous broadcast is requested by a user, the control unit 190 controls the memory controller 140 and the USB interface 130 to output the previous broadcast requested from the storage medium in which the requested previous broadcast is temporarily stored.

On the other hand, it has been explained in the exemplary embodiment that if the storage delay of the broadcast generated in the USB storage medium 200 is determined to be solved, the previous broadcast replaceably stored in the flash memory 150 is moved to the USB storage medium 200. However, it is merely an example and the present invention is not limited to it.

Therefore, even if the storage delay of the broadcast is solved, the previous broadcast replaceably stored in the flash memory 150 may not be moved to the USB storage medium 200. In this case, some of the broadcast is separately stored in the flash memory, and if the previous broadcast replaceably stored in the flash memory 150 is requested by a user, the control unit 190 controls the memory controller 140 to output the requested previous broadcast from the flash memory 150.

Additionally, the exemplary embodiment assumes the flash memory 150 as the internal storage medium. However, it corresponds to an example for explanation, and another storage medium except for the flash memory may realize the internal storage medium. Then, the storage medium includes a semiconductor memory except for the flash memory and a magnetic storage medium such as an HDD.

Additionally, the exemplary embodiment assumes the USB storage medium 200 as the external storage medium. However, it also corresponds to an example for explanation and the technical sprit of the present invention may applied to an external storage medium connected to the broadcast receiving apparatus to communicate with the broadcast receiving apparatus in a different method from the USB method. The applicable external storage medium includes a semiconductor memory (e.g., a flash memory and a memory card), a magnetic storage medium, etc., which are connected to the broadcast receiving apparatus by an IEEE 1394 method, a PCMCIA method, a serial communication, etc.

On the other hand, since the broadcast receiving apparatus shown in Figure 1 corresponds to an exemplary embodiment, the broadcast receiving apparatus to which the present invention is applied does not need to include all the blocks shown in Figure 1 and unnecessary blocks may be omitted. For example, in the case in which the broadcast receiving apparatus is a set-top box, the broadcast output unit 180 may be omitted.

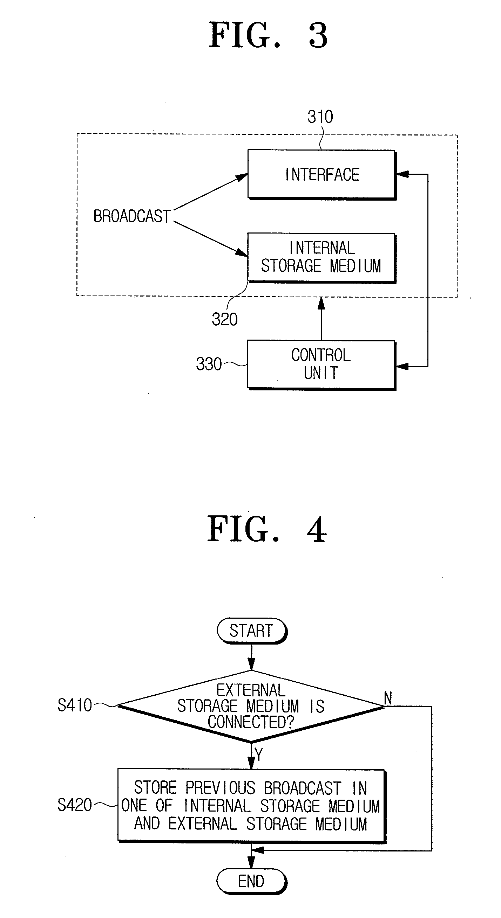

Hereinafter, another embodiment of the present invention will be described in detail with reference to Figures 3 and 4.

As shown in Figure 3, the broadcast receiving apparatus according to another exemplary embodiment of the present invention includes an interface 310, an internal storage medium 320, and a control unit 330. The interface 310 is connected to an external storage medium (not shown) to communicate with the external storage medium. The control unit controls the broadcast receiving apparatus so that an amount of a previous broadcast corresponding to a predetermined period of time, which is required for providing the previous broadcast of a point in time previous to the current point in time, is selectively and temporarily stored in one of the internal storage medium 320 and the external storage medium connected to the interface 310.

According to the broadcast receiving method shown in Figure 4, the control unit 330 determines connection of the external storage medium to the interface 310 first (S410). If the external storage medium is determined to be connected (S410-Y), the control unit 330 controls the broadcast receiving apparatus to selectively and temporarily store the previous broadcast in one of the internal storage medium and the external storage medium (S420).

Accordingly, a broadcast receiving apparatus and a broadcast receiving method for providing the time-shift function using an internal storage medium and an external storage medium can be realized.

As mentioned above, according to the exemplary embodiments of the present invention, the time-shift function can be provided using the external storage medium connected to the broadcast receiving apparatus. Therefore, the number of storages of the internal storage medium embedded in the broadcast receiving apparatus can be reduced, thereby increasing the lifespan of the internal storage medium.

Additionally, since the replaceable storage can be performed using the internal storage medium in the case in which a storage delay of the broadcast is generated in the external storage medium, the previous broadcast is prevented from being unable to be stored.

Although exemplary embodiments of the present invention have been shown and described, it would be appreciated by those skilled in the art that the present invention is not limited to the exemplary embodiments and various modifications might be made without departing from the essence of the invention claimed herein, and such modifications should be understood to be within the scope of the present invention.

## Claims

1. A broadcast receiving apparatus comprising:
an internal storage medium arranged to store a broadcast;
an interface operable to be connected to an external storage medium to communicate with an external storage medium; and
a control unit for controlling the broadcast receiving apparatus so that at least a portion of a previous broadcast is selectively and temporarily stored in one of the internal storage medium and an external storage medium connected to the interface.

2. The broadcast receiving apparatus as claimed in claim 1, wherein the control unit is arranged to control the broadcast receiving apparatus so that the previous broadcast is stored in an external storage medium, if an external storage medium is connected to the interface while the previous broadcast is being stored in the internal storage medium.

3. The broadcast receiving apparatus as claimed in claim 1 or 2, wherein the control unit is arranged to control the broadcasting receiving apparatus so that any one of the previous broadcasts stored in the internal storage medium and/or an external storage medium is output when a display instruction requesting display of the previous broadcast is input.

4. The broadcast receiving apparatus as claimed in claim 1, 2 or 3, wherein the control unit is arranged to control the broadcast receiving apparatus so that the previous broadcast is temporarily stored in the internal storage medium if an external storage medium is separated from the interface while the previous broadcast is being stored in an external storage medium.

5. The broadcast receiving apparatus as claimed in any preceding claim, wherein the control unit is arranged to control the broadcast receiving apparatus so that the previous broadcast is temporarily stored in one of the internal storage medium and an external storage medium according to user selection.

6. The broadcast receiving apparatus as claimed in any preceding claim, wherein the control unit is arranged to control the broadcast receiving apparatus so that the previous broadcast is stored in the internal storage medium, if there is a storage delay of the previous broadcast in an external storage medium connected to the interface.

7. The broadcast receiving apparatus as claimed in claim 6, wherein the control unit is arranged to control the broadcast receiving apparatus so that the previous broadcast temporarily stored in the internal storage medium is transferred to an external storage medium, if the storage delay of the previous broadcast no longer exists at the external storage medium.

8. The broadcast receiving apparatus as claimed in claim 1, wherein the internal storage medium comprises one of a semiconductor memory, a flash memory, a magnetic storage medium, and a hard disk drive (HDD), and the external storage medium comprises one of a semiconductor memory, a flash memory, a memory card, a magnetic storage medium, and an HDD which is connected to the interface to communicate with the interface in one of a universal serial bus (USB) method, an IEEE 1394 method, a personal computer memory card international association (PCMCIA) method, and a serial communication.

9. The broadcast receiving apparatus as claimed in claim 1, further comprising a broadcast output unit for display of the broadcast on a display device.

10. A broadcast receiving method comprising:
determining whether a connection to an external storage medium is made; and
storing selectively and temporarily at least a portion of a previous broadcast in one of an internal storage medium and the external storage medium, if the external storage medium is connected.

11. The broadcast receiving method as claimed in claim 10, wherein in the storing, the previous broadcast is stored in the external storage medium if the external storage medium is connected while the previous broadcast is being stored in the internal storage medium.

12. The broadcast receiving method as claimed in claim 10 or 11, further comprising outputting one of the previous broadcasts stored in the internal storage medium and the external storage medium if a display instruction of the previous broadcast is input.

13. The broadcast receiving method as claimed in claim 10, further comprising storing temporarily the previous broadcast in the internal storage medium, if the external storage medium is separated while the previous broadcast is being stored in the external storage medium.

14. The broadcast receiving method as claimed in any of claims 10 to 13, wherein in the storing, the previous broadcast is temporarily stored in one of the internal storage medium and the external storage medium in accordance to a user selection.

15. The broadcast receiving method as claimed in any of claims 10 to 14, further comprising storing the previous broadcast in the internal storage medium, if there is a storage delay of the previous broadcast in the external storage medium.

16. The broadcast receiving method as claimed in claim 15, further comprising:
transferring the previous broadcast temporarily stored in the internal storage medium to the external storage medium, if the storage delay of the previous broadcast no longer exists at the external storage medium.

17. The broadcast receiving method as claimed in any of claims 10 to 16, further comprising displaying the broadcast on a display device.
